# EUROPEAN PATENT APPLICATION

(11) **EP 0 605 306 A1**
(43) Date of publication of application: **06.07.1994**
(21) Application number: 93403169.1
(22) Date of filing: 24.12.1993
(51) Int. Cl.: B23Q 7/04, B29C 45/42

(54) **Industrial robot for removing a molding from a molding machine**

(30) Priority: 28.12.1992 JP 361603/92
(71) Applicant: SONY CORPORATION, Tokyo (JP)
(72) Inventor: Kimura, Akira, c/o Sony Corporation, Tokyo (JP); Saito, Atsushi, c/o Sony Corporation, Tokyo (JP)
(74) Representative: Thévenet, Jean-Bruno

(57) **Abstract**

The takeout robot (20) for taking out a molding (F) from the cavity of a molding machine (10) comprises an arm mechanism (24) having a holding head (154) for holding the molding (F), an arm operating means (22) capable of operating the arm mechanism (24) so that the holding head (154) of the arm mechanism (24) moves at a comparatively high composite speed equal to the sum of the respective speeds of at least two moving members in both a first direction (the direction of the arrow X) and a second direction (the direction of the arrow Z) different from the first direction.

## Description

### BACKGROUND OF THE INVENTION

### Field of the Invention

The present invention relates to an industrial robot and, more specifically, to an industrial robot which is particularly suitable, for example, for removing a molding from a molding machine. Still more particularly, this invention relates to a takeout robot having a molding holding head which moves along a composite x, z path and has a parallel linkage.

### Description of the Related Art

Normally, a pair of mating molding heads of a molding machine must be moved away from each other to open a cavity formed between the molding heads for removing a molding from the cavity and for maintenance work. The molding heads are moved a necessary distance by a driving unit, such as a pneumatic cylinder actuator or a servomotor. The stroke of the molding heads is limited to a short distance to enable a driving unit having a comparatively small capacity and a comparatively small size to drive the molding heads. Alternatively, a driving unit having a comparatively large capacity and a comparatively large size is used to move the molding head a comparatively long distance. In either case, an industrial robot for removing a molding from the cavity cannot begin its operation before the cavity is opened completely, and the cavity cannot be closed before the molding is removed from the cavity. Such a mode of operation for opening the cavity, removing the molding from the cavity, and closing the cavity causes a significant time loss.

The pneumatic cylinder actuator requires a difficult control of operations for accelerating and decelerating moving parts, and the servomotor is large in size and weight. Neither the pneumatic cylinder actuator nor the servomotor is suitable for quick removal of the molding from the cavity.

### SUMMARY OF THE INVENTION

The present invention has been provided to solve the foregoing problems in a conventional industrial robot for handling objects and it is therefore an object of the present invention to provide an industrial robot capable of quickly handling an object, such as a molding, and having a relatively small, lightweight construction.

A takeout robot in one aspect of the present invention for "taking out" or removing an object from a containing space formed between opposed structural members which are capable of being moved to open and close the containing space, comprising: an arm mechanism having a holding head for holding the object on the holding head and capable of being operated so that the holding head moves to the object contained in the containing space to hold the object and moves away from the containing space to remove the object from the containing space; an arm operating means capable of operating the arm mechanism so that the holding head of the arm mechanism moves toward and away from the containing space along a composite, curved path which is equivalent to the composition of at least a first path parallel to the direction along which the structural members forming the containing space are moved for opening and closing the containing space and a second path perpendicular to the direction along which the structural members are moved for opening and closing the containing space; and a driving means for driving the arm operating means to operate the arm mechanism.

Preferably, the arm operating means is capable of further operating the arm mechanism so that the holding head moves in a direction perpendicular to the direction in which the structural members are moved for opening and closing the containing space. The arm mechanism comprises a parallel linkage. The arm operating means comprises a cam follower, and a grooved cam provided with a cam groove along which the cam follower moves.

A takeout robot in another aspect of the present invention for removing a molding formed by a molding machine from a cavity formed between opposed molding heads included in the molding machine and which are capable of being moved in directions for opening and closing the cavity comprises an arm mechanism having a holding head for holding the molding on the holding head and capable of being operated so that the holding head moves to the molding when contained in the cavity to hold the molding and moves away from the cavity to take out the molding from the cavity; an arm operating means capable of operating the arm mechanism so that the holding head of the arm mechanism moves toward and away from the cavity along a composite, curved path equivalent to the composition of at least a path parallel to the direction along which the molding heads are moved for opening and closing the cavity and a path perpendicular to the direction along which the molding heads are moved for opening and closing the cavity; and a driving means for driving the arm operating means to operate the arm mechanism.

In the takeout robot in accordance with the present invention, the holding head of the arm mechanism holding an object can be moved at a high speed equal to the sum of the respective speeds of two moving members along the predetermined composite, curved path, so that the removal can be completed in a relatively short time.

### BRIEF DESCRIPTION OF THE DRAWINGS

The above and other objects, features and advantages of the present invention will become more apparent from the following description taken in connection with the accompanying drawings, in which:
Fig. 1 is a schematic fragmentary side view showing an arm mechanism included in a takeout robot in a preferred embodiment according to the present invention, and a part of a molding machine;
Fig. 2 is a side view showing the takeout robot including the arm mechanism shown in Fig. 1 in connection with the molding machine;
Fig. 3 is a top plan view of an arm moving mechanism included in the takeout robot shown in Fig. 2;
Fig. 4 is a bottom plan view of the arm moving mechanism shown in Fig. 3;
Fig. 5 is a cross-sectional view of the arm moving mechanism shown in Figs. 3 and 4;
Fig. 6 is a diagrammatic view showing the respective loci of a first arm link, a cam follower and an arm head included in the arm mechanism shown in Fig. 1; and
Fig. 7 is a diagrammatic view to assist in explaining the operation of the takeout robot shown in Figs. 1 to 6 in comparison with that of a conventional takeout robot.

### DESCRIPTION OF THE PREFERRED EMBODIMENTS

A preferred embodiment of the present invention will be described hereinafter with reference to the accompanying drawings. It is noted that, although the preferred embodiment specifically described herein incorporates some technically preferable restrictions, these restrictions do not limit the scope of the present invention unless otherwise specified, and the present invention is not limited in its practical application to the preferred embodiment specifically described herein.

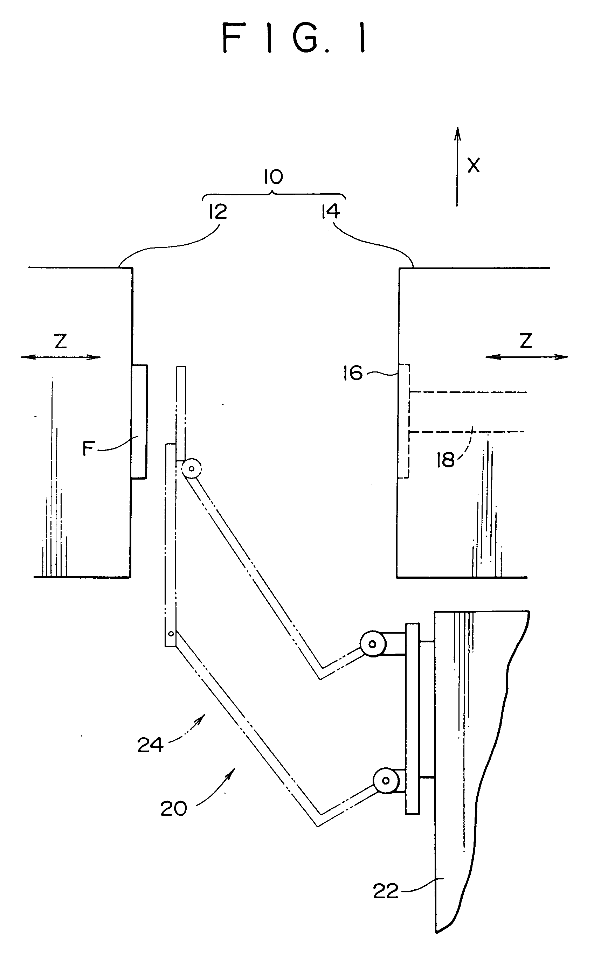

Referring to Fig. 1, a molding machine 10 has a first molding head 12 and a second molding head 14, which can be moved toward and away from each other in the directions of the arrows Z by a suitable driving device, not shown, such as a pneumatic cylinder actuator. The second molding head 14 is provided with a cavity 16 and a molding material supply passage 18 through which a molding material is supplied into the cavity 16. Fig. 1 shows a state where the molding heads 12 and 14 have been moved away from each other to open the cavity 16.

When forming a molding F, such as a disk, the molding heads 12 and 14 are moved toward each other to close the cavity 16. A molding material, such as a molten resin, is thus supplied through the molding material supply passage 18 into-the cavity 16. Thus, the molding is formed in the cavity 16.

The molding F thus formed is used as a base plate for a recording medium, such as an optical disk or a magneto-optic disk. The molding F can be quickly removed from the molding head 12 by a takeout robot 20 having an arm mechanism 24, i.e., a robot arm, provided with a suction type end effector.

The takeout robot 20 for taking out the molding F from the molding machine 10 will be described hereinafter.

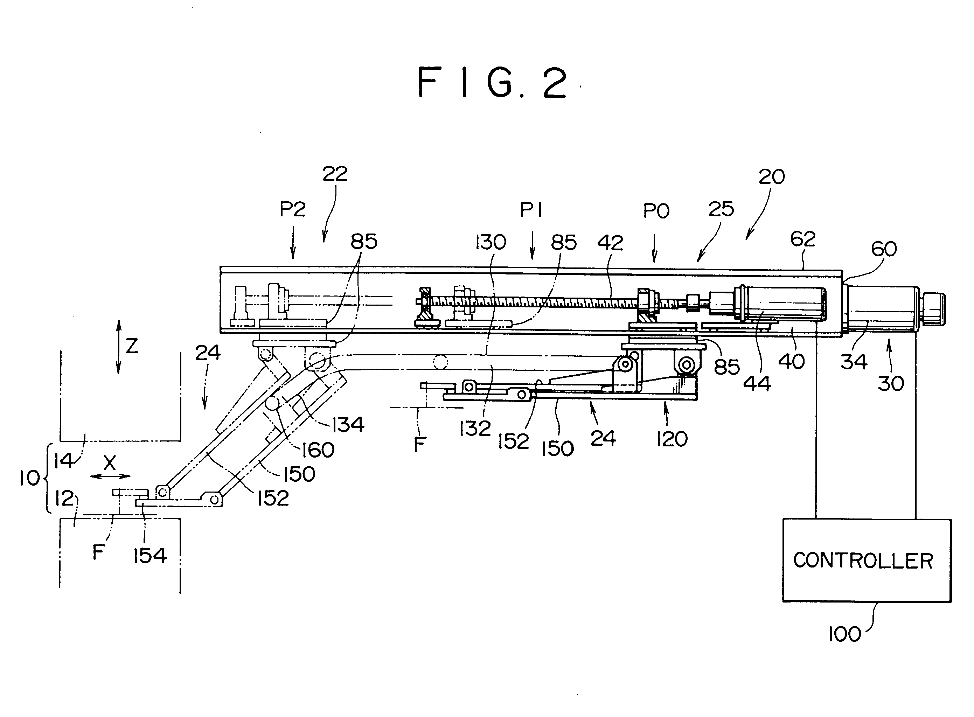

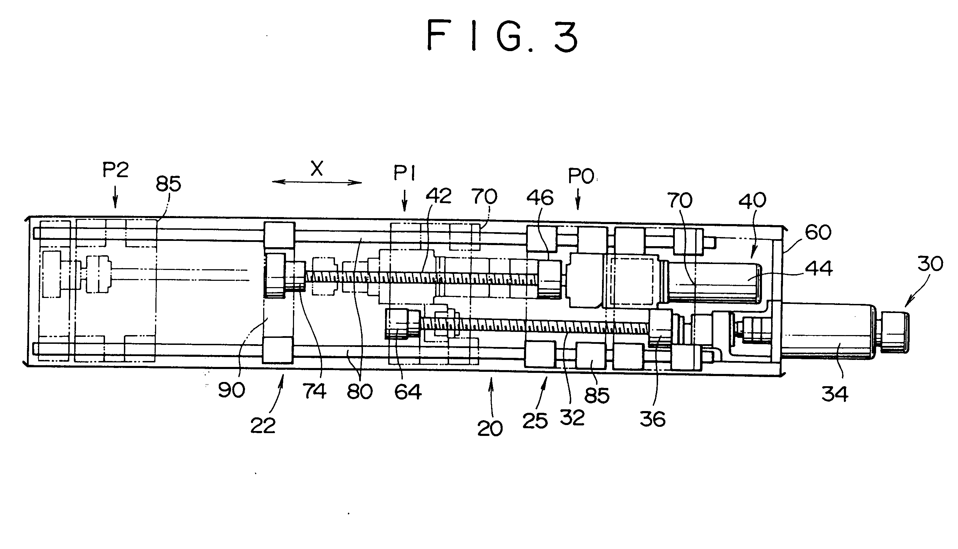

Referring to Figs. 2 and 3, the takeout robot 20 has the arm mechanism 24 for taking out the molding F from the molding machine 10, and an arm operating unit 22 that operates the arm mechanism 24.

Referring to Fig. 2, the arm operating unit 22 advances a holding head 154 included in the arm mechanism 24 rapidly at a high speed equal to the sum of the respective speeds of two moving parts, into the space between the molding heads 12 and 14 of the molding machine 10. The arm operating unit then retracts the holding head 154 from the space between the molding heads 12 and 14 after the holding head 154 has secured the molding F, for example, by suction between the holding head 154 and the molding F.

The arm operating unit 22 has a main frame 25, a first driving system 30, and a second driving system 40. The first driving system 30 and the second driving system 40 are arranged on the main frame 25 with the respective shafts thereof each extended in parallel to the direction of the arrow X as shown in Figs. 3 to 5.

As shown in Fig. 3, the first driving system 30 of the operating unit 22 has a first ball screw 32, and a first reversible motor 34 for rotating the first ball screw 32 in opposite directions. Preferably, the first reversible motor 34 is a servomotor. The first reversible motor 34 is held on the narrow end plate 60 of the main frame 25. The first ball screw 32 has one end connected to the output shaft of the first reversible motor 34 and the other end supported in a bearing 64 fastened to the base plate 62 of the main frame 25. The first reversible motor 34 is driven according to a command provided by a controller 100 to rotate the first ball screw 32 in either the normal direction or the reverse direction. A first ball nut sleeve 36 is put on the first ball shaft 32. The first ball nut sleeve 36 is moved in either of the opposite directions of the arrows X by rotating the first ball screw 32 in the normal direction or the reverse direction. A first slide base 70 represented by alternate long and two short dashes lines in Fig. 3 is connected or fixed to the first ball nut sleeve 36 for linear movement in the directions of the arrows X together with the first ball nut sleeve 36 along two guide shafts 80 within the effective range of stroke of the first ball nut sleeve 36.

As shown in Fig. 3, the second driving system 40 has a second ball screw 42, and a second reversible motor 44 for rotating the second ball screw 42 in opposite directions. Preferably, the second reversible motor 44 is a servomotor. The second reversible motor 44 is mounted fixedly on the first slide base 70. The second ball screw 42 of the second driving system 40 has one end connected to the output shaft of the second reversible motor 44 and the other end supported in a bearing 74 fixedly mounted on a slide member 90. The slide member 90, similarly to the first slide base 70 is movable in the directions of the arrows X along the guide shafts 80. The second reversible motor 44 is driven according to a command provided by the controller 100 to rotate the second ball screw 42 in either of the opposite rotational directions. The second driving system 40 has a second ball nut sleeve 46 rotatably secured on the second ball screw 42. The second ball screw 42 is rotated in either of the opposite rotational directions to move the second ball nut sleeve 46 linearly in either of the directions of the arrows X. A rectangular slide base 85 indicated by alternate long and two short dashed lines in Fig. 3 is connected or fixed to the second ball nut sleeve 46. Thus the second slide base 85 and the slide member 90 can be linearly moved together with the second ball nut sleeve 46 along the guide shafts 80 within the effective range of stroke of the second ball nut 46 by rotating the second ball screw 42 in the directions of the arrows X.

The first slide base 70 can be linearly advanced a distance corresponding to the effective stroke of the first ball nut sleeve 36 of the first driving system 30 from its initial position to a position P₁. The second slide base 85 can be linearly advanced a distance corresponding to the effective stroke of the second ball nut sleeve 46 of the second driving system 40 from its initial position P₀ to a position P₂. Thus, the second slide base 85 can be linearly advanced a distance corresponding to the sum of the respective effective strokes of the first ball nut sleeve 36 of the first driving system 30 and the second ball nut sleeve 46 of the second driving system 40; that is the distance between the initial position P₀ and the position P₂ is equal to the sum of the respective strokes of the first ball nut sleeve 36 and the second ball nut sleeve 46. Since the controller 100 controls the first driving system 30 and the second driving system 40 so that the first ball screw 32 and the second ball screw 42 are driven simultaneously for rotation, the second slide base 85 can be rapidly and linearly moved at a speed equal to the sum of the respective speeds of the first ball nut sleeve 36 and the second ball nut sleeve 46.

Referring now to Fig. 2, the arm mechanism 24 has a base 120 connected to the second slide base 85. In Fig. 2, the arm mechanism 24 in its contracted state is indicated by continuous lines in the central portion of Fig. 2, and the arm mechanism 24 in its extended state is indicated in phantom by alternate long and two short dashed lines in the left-hand portion of Fig. 2. The main frame 25 is provided with a guide member, not shown, provided with a cam groove 130 for guiding the arm mechanism 24. The cam groove 130 has a straight section 132 extending along the direction of the arrow X and a front section 134 extending from the front end of the straight section 132 at an angle to the direction of the arrow X. A roller 160 included in the arm mechanism 24 rolls along the cam groove 130. The arm mechanism has a first arm link 150 having one end pivotally joined to the holding head 154 and the other end pivotally joined to the second slide base 85, and a second arm link 152 having one end pivotally joined to the holding head 154 and the other end pivotally joined to the second slide base 85. Thus, the first arm link 150, the second arm link 152, the holding head 154 and the second slide base 85 constitute a parallel linkage. The roller 160 is supported on a bracket fixed to the first arm link 150.

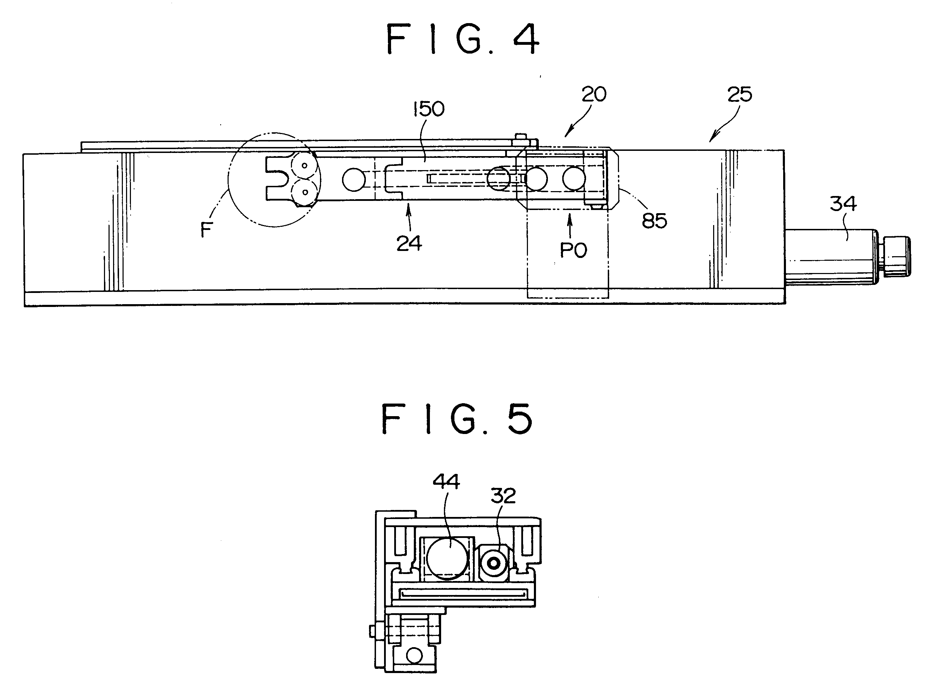

As shown in Figs. 2 and 4, the arm mechanism 24 is in the contracted state at its standby position when the second slide base 85 is at the initial position P₀. The arm mechanism is in a completely extended state when the second slide base 85 is at the position P₂.

The operation of the takeout robot 20 for quickly removing the molding F from the molding machine 10 will be described hereinafter.

The arm mechanism 24 of the takeout robot 20 is in the completely contracted state as indicated by continuous lines in Fig. 2. The first molding head 12 and the second molding head 14 of the molding machine 10 are moved toward each other in the directions of the arrows Z and joined together by a driving device, not shown, such as a pneumatic cylinder actuator, to close the cavity 16 (see Fig. 1), and a molding material, such as a molten resin, is injected into the cavity 16 to form the molding F.

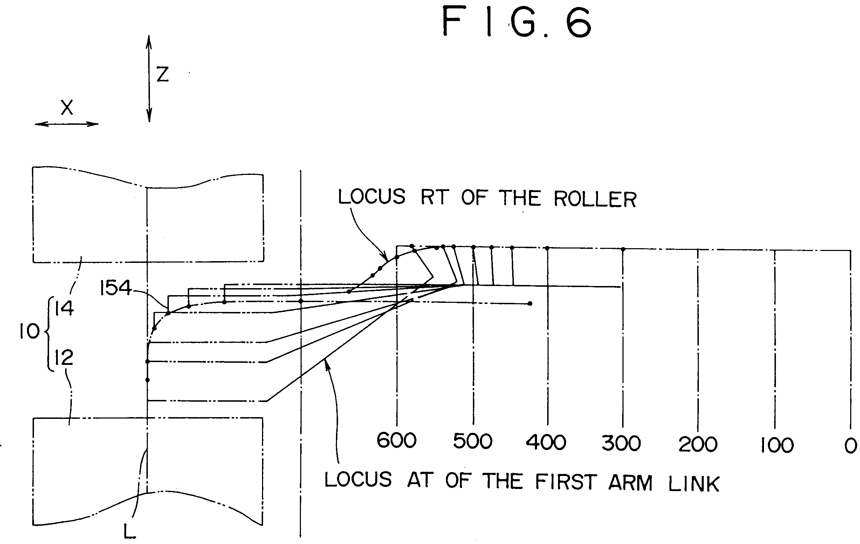

Then, the first molding head 12 and the second molding head 14 are moved away from each other to open the cavity 16. Then, the first reversible motor 34 of the first driving system 30 and the second reversible motor 44 of the second driving system 40 are actuated simultaneously to rotate the first ball screw 32 and the second ball screw 42 simultaneously in the normal direction. Consequently, the second slide base 85 is advanced from the initial position P₀ to the position P₂ (as shown in Fig. 2). As the second slide base 85 is advanced, the roller 160 rolls along the cam groove 130, i.e., along a locus RT shown in Fig. 6 so that the arm mechanism 24 in the completely contracted state is extended gradually to the completely extended state. That is, the first arm link 150 and the second arm link 152 are controlled through the roller 160 by the cam groove 130 so as to move respectively along loci shown in Fig. 6. Indicated at AT is a locus along which the first arm link 150 moves. As shown in Fig. 6, the holding head 154 moves along the direction of the arrows X while the roller 160 moves along the straight section 132 of the cam groove 130, and moves along a curved path equivalent. to the composition of at least paths along both the directions of the arrows X and Z when the roller 160 moves along the front section 134 of the cam groove 130. In the final stage of advancement, the holding head 154 advances toward the first molding head 12 along the center axis L of the first molding head 12.

Thus, the holding head 154 advances into the space between the molding heads 12 and 14 to hold the molding F by a suitable end effector, preferably a suction chuck (not shown), mounted on the holding head 154. Then, the arm mechanism 24 is reversed to retract the holding head 154 secured to the molding F from the space between the molding heads 12 and 14. Then, the roller 160 moves from the front section 134 and the straight section 132 in the reverse direction and, consequently, the arm mechanism is returned to the completely contracted state.

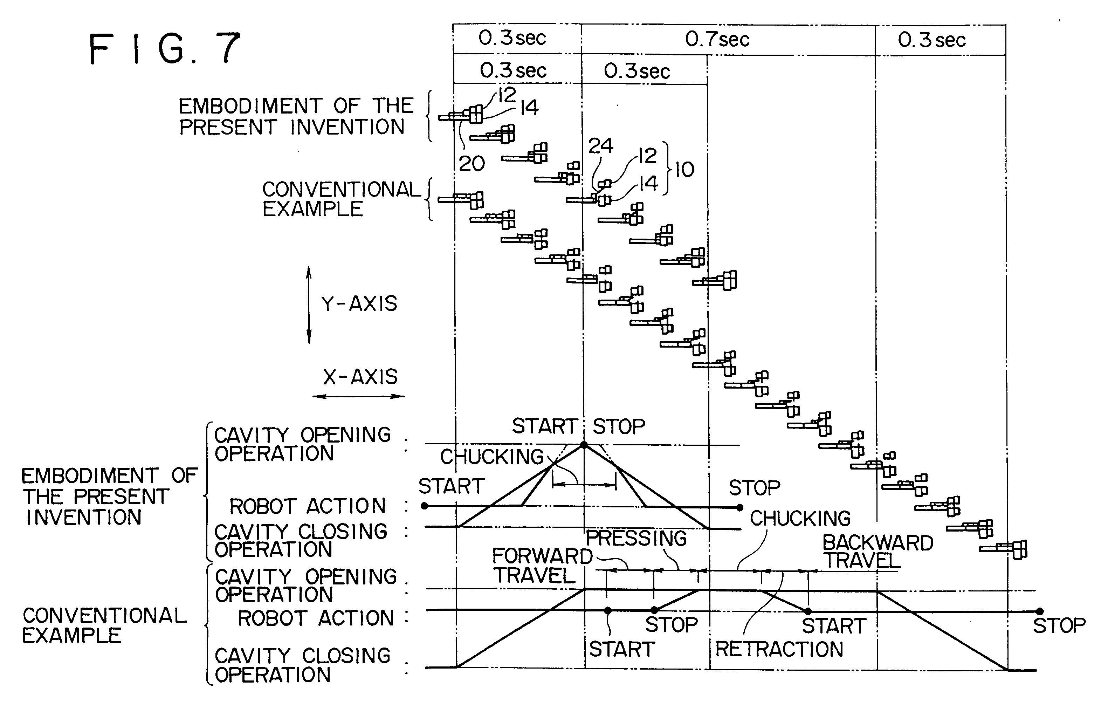

Fig. 7 shows the operations of the arm mechanism 24 and the molding machine 20 in comparison with those of the operations of the holding head of the conventional takeout robot and the associated molding machine. As is obvious from Fig. 7, the time required for one molding removal cycle of the takeout robot 10 of the present invention is about half the time required for one molding removal cycle of the conventional takeout robot.

Since the first driving system 30 and the second driving system 40 of the arm operating unit 22 are interlocked linearly so as to constitute a rapid driving mechanism, the arm mechanism 24 can be moved at a resultant speed equivalent to the sum of the arm mechanism moving speed of the first driving system 30 and that of the second driving system 40 for removing the molding F from the molding machine 20, so that the tact time of the molding machine can be reduced.

If it is desired to drive the end effector of the conventional XY robot at a speed equal to such a resultant speed, considerable changes and modifications will be necessary in the component parts including ball screws and motors taking into consideration required power of the motors, the critical speeds of the ball screws and such, which will necessarily increase the size of the XY robot.

Since the takeout robot 20 of the present invention is provided with the holding head 154 having a comparatively small thickness, the takeout robot 20 can be started upon the start of opening of the cavity, whereas the operation of the conventional takeout robot cannot be started until the cavity is fully opened because the stroke of the holding head is short or the driving unit is large.

When the takeout robot 20 of the present invention is used in combination with the molding machine, it is possible to start closing the cavity of the molding machine immediately after the molding has been held by the holding head of the takeout robot 20. In contrast, it is impossible to start closing the cavity until the molding has been completely moved away from the molding machine when a conventional takeout robot is used in combination with the molding machine.

Thus, the takeout robot of the present invention is capable of removing the molding with the least time loss and a significant reduction in the cycle time.

The present invention is not limited in its practical application to the foregoing embodiment which has been specifically described herein; rather, the takeout robot of the present invention can be used also for mounting parts on or removing parts from machines other than a molding machine.

The takeout robot of the present invention may also be provided with an arm operating unit comprising three driving systems each provided with a motor, a ball screw and a ball nut sleeve and having a construction similar to those of the driving systems 30 and 40 to move the arm mechanism at a resulting speed equal to the sum of the respective arm moving speeds of the three driving systems. Moreover, the directions of the arrows X and Z need not be necessarily perpendicular to each other; instead the directions may be optionally changed according to the construction of the apparatus with which the takeout robot is used in combination.

## Claims

1. A takeout robot (20) for removing an object (F) from a containing space formed between opposed structural members (12,14) which are capable of being moved to open and close the containing space, said takeout robot comprising:
an arm mechanism (24) having a holding head (154) for holding the object on the holding head and capable of being operated so that the holding head moves to the object contained in the containing space to secure the object and moves away from the containing space to remove the object from the containing space;
an arm operating means (22) capable of operating the arm mechanism so that the holding head of the arm mechanism moves toward and away from the containing space along a composite path (RT) which is equivalent to the composition of at least a first path (arrow X) parallel to the direction along which the structural members forming the containing space are moved for opening and closing the containing space, and a second path (arrow Z) perpendicular to the direction along which the structural members are moved for opening and closing the containing space; and
a driving means (30,40) for driving the arm operating means to operate the arm mechanism.

2. A takeout robot (20) according to claim 1, wherein the arm operating means (22) is capable of moving further along a direction perpendicular to the direction along which the structural members (12,14) are moved.

3. A takeout robot (20) according to claim 1, wherein the arm mechanism (24) comprises a parallel linkage (150,152).

4. A takeout robot according to claim 1, wherein the arm operating means (22) comprises a grooved cam provided with a cam groove (130), and a roller (160) provided in the arm mechanism (24) so as to roll along the cam groove of the grooved cam.

5. A takeout robot (20) according to claim 1, wherein the holding head (154) of the arm mechanism (24) includes a suction type member for holding said molding (F).

6. A takeout robot according to claim 1, wherein said composite path (RT) is curved.

7. A takeout robot (20) for removing an object (F) from a containing space (16) formed between opposed structural members (12,14) which are capable of being moved to open and close the containing space, said takeout robot comprising:
an arm mechanism (24) provided with a holding head (154) capable of holding the object on the holding head by suction to remove the object from the containing space;
a cam means (130,166) for controlling the operation of the arm mechanism so that the holding head of the arm mechanism moves along a composite path (RT) equivalent to the composition of at least a first path (arrow X) parallel to the direction along which the structural members are moved for opening and closing the containing space and a second path (arrow Z) perpendicular to the direction along which the structural members are moved; and
a driving means (30,40) for driving the cam means to operate the arm mechanism.

8. A takeout robot (20) according to claim 7, wherein said composite (RT) path is curved.

9. A takeout robot (20) for removing a molding (F) from a cavity (16) formed between molding heads (12,14) included in a molding machine which are capable of being moved to open and close the cavity, said takeout robot comprising:
an arm mechanism (24) having a holding head (154) for holding the molding and capable of being operated so that the holding head moves to the molding contained in the cavity to hold the molding on the molding head and moves away from the cavity to remove the molding from the cavity;
an arm operating means (22) capable of operating the arm mechanism (24) so that the holding head of the arm mechanism moves toward and away from the cavity (16) along a composite path (RT) equivalent to the composition of a first path (arrow X) parallel to the direction along which the molding heads are moved for opening and closing the cavity and a second path (arrow Z) perpendicular to the direction along which the molding heads are moved for opening and closing the cavity; and
a driving means (30,40) for driving the arm operating means to operate the arm mechanism.

10. A takeout robot (20) according to claim 9, wherein said composite path (RT) is curved.
